# EUROPÄISCHE PATENTSCHRIFT

(11) **EP 0 682 076 B1**
(45) Veröffentlichungstag und Bekanntmachung des Hinweises auf die Patenterteilung: **10.09.1997**
(21) Anmeldenummer: 95106772.7
(22) Anmeldetag: 05.05.1995
(51) Int. Cl.: C08L 25/02, C08J 9/18

(54) **Expandierbare Styrolpolymerisate**
Expandable styrene polymers
Polymères styréniques expansibles

(30) Priorität: 13.05.1994 DE 4416863
(43) Veröffentlichungstag der Anmeldung: 15.11.1995
(73) Patentinhaber: BASF Aktiengesellschaft, 67063 Ludwigshafen (DE)
(72) Erfinder: Henn, Rolf, Dr., D-68775 Ketsch (DE); Hahn, Klaus, Dr., D-67281 Kirchheim (DE); Deckers, Andreas, Dr., D-55234 Flomborn (DE); McKee, Graham Edmund, Dr., D-67433 Neustadt (DE); Tatzel, Hermann, D-69469 Weinheim (DE); Drumm, Rudolf, Dr., D-67688 Rodenbach (DE); Fischer, Jürgen, Dr., D-67117 Limburgerhof (DE)

(56) Entgegenhaltungen:
- EP-A- 0 397 001
- WO-A-94/10232
- DE-A- 4 403 017

## Beschreibung

Die Erfindung betrifft expandierbare Styrolpolymerisate, die zur Herstellung von elastischen Schaumstoffen geeignet sind.

Schaumstoffe auf Basis von Polystyrol haben als Wärmedämm- und Verpackungsmaterial eine große technische Bedeutung erlangt. Sie werden großtechnisch dadurch hergestellt, daß man zunächst durch Suspensionspolymerisation von Styrol in Gegenwart eines Treibmittels expandierbare Styrolpolymerisate herstellt, diese durch Erhitzen zu Schaumstoffpartikeln aufschäumt und anschließend in Formen zu Formteilen verschweißt.

Polystyrolschaumstoffe sind harte Schaumstoffe. Ihre geringe Elastizität ist für viele Anwendungen, beispielsweise auf dem Verpackungsgebiet, nachteilig, da der Schutz des verpackten Gutes gegen Schlag- und Stoßbeanspruchung nur unzureichend möglich ist und die als Verpackungsmittel verwendeten Schaumstofformteile bereits bei geringer Deformation brechen.

Es gab daher in der Vergangenheit bereits Versuche, die Elastizität von Polystyrolschaumstoffen zu erhöhen.

Ein Verfahren, Schaumstoffe aus Polystyrol zu elastifizieren, ist in EP-A-561 216 beschrieben. Hierbei werden Schaumstoffblöcke der Dichte 8 bis 12 kg/m³ in einer Richtung auf etwa 1/3 ihrer Abmessung komprimiert und danach wieder entspannt. Aus den so behandelten Blöcken geschnittene Platten besitzen eine erhöhte Elastizität und werden beispielsweise zur Trittschalldämmung verwendet.

Verfahrensbedingt ist jedoch eine Übertragung dieser Arbeitsweise auf Formteile kaum zu realisieren und wird daher nicht durchgeführt.

In US-A-4,424,285 und US-A-4,409,338 werden schäumbare Polystyrolpolymere beschrieben, die durch Polymerisation einer Lösung von 0,5 bis 4,0 Gew.-% Styrol-Butadien- bzw. Styrol-Butadien-Styrol-Blockcopolymeren in Styrol hergestellt werden und eine kurze Formkühlzeit aufweisen.

Die Elastizität der Schaumstoffe wird dadurch jedoch auf Grund der geringen Menge des zugesetzten Kautschuks nur unwesentlich erhöht.

Nach US-A-4,307134 und US-A-4,333,970 werden auf Polystyrolperlen Schalen aus Polystyrol-Polybutadien-Copolymeren unter teilweiser Pfropfung aufpolymerisiert, die so hergestellten Perlen mit Treibmittel imprägniert und anschließend expandiert. Die so hergestellten Schaumstoffe weisen jedoch eine unregelmäßige Zellstruktur und unzureichende mechanisch Eigenschaften auf.

GB-A-1,220,611 beschreibt eine schäumbare Polymerzusammensetzung mit erhöhter Ölbeständigkeit, die aus einem Polystyrol-Polyacrylnitril-Copolymer und einem Polybutadien-Elastomer besteht, wobei das Polystyrol-Polyacrylnitril-Copolymer im Elastomer dispergiert ist und das Treibmittel unter Quellung und teilweiser Lösung in die Elastomerphase absorbiert wird. Derartige Schaumstoffe weisen jedoch unzureichende mechanische Eigenschaften auf.

Allen beschriebenen Verfahren des Standes der Technik ist gemeinsam, daß das Treibmittel sehr schnell aus den Perlen diffundiert. Bereits nach wenigen Tagen kann der Treibmittelverlust so groß sein, daß eine ordnungsgemäße Verschäumung der Perlen nicht mehr möglich ist. Insbesondere bei Zusatz von Elastomeranteilen über 5 Gew.-%, wie sie zur Erzielung einer ausreichenden Elastifizierung notwendig sind, macht sich dieser Effekt störend bemerkbar.

Die Aufgabe unserer Erfindung war es, expandierbare Styrolpolymerisate bereitzustellen, die zur Herstellung elastischer Schaumstoffe geeignet sind, auch nach längerer Lagerung keine signifikanten Treibmittelverluste aufweisen sowie recycelfähig sind.

Erfindungsgemäß wird die Aufgabe gelöst durch expandierbare Styrolpolymerisate für elastische Polystyrolschäume, enthaltend
a) 75 bis 99 Gew.-% Polystyrol und/oder eines Styrolcopolymerisates mit mindestens 80 Gew.-% einpolymerisiertem Styrol,
b) 0 bis 24 Gew.-%, mindestens eines styrollöslichen Elastomeren,
c) 1 bis 25 Gew.-%, mindestens eines Pfropfcopolymerisats mit Kern-Schale-Aufbau, bestehend aus
   - 40 bis 80 Gew.-% eines Kerns aus einem Copolymerisat aus 40 bis 90 Gew.-% eines Alkyl(meth)acrylats und 60 bis 10 Gew.-% Styrol und
   - 60 bis 20 Gew.-% einer Schale aus einem Copolymerisat aus 80 bis 99 Gew.-% Styrol und 1 bis 20 Gew.-% eines Alkyl(meth) acrylats
d) 1 bis 15 Gew.-%, bezogen auf die Summe aus a), b) und c), eines niedrigsiedenden Treibmittels, sowie gegebenenfalls
e) übliche Zusatzstoffe in wirksamen Mengen,

Gegenstand der Erfindung sind demzufolge die oben beschriebenen expandierbaren Styrolpolymerisate.

Gegenstand der Erfindung sind weiterhin die Herstellung der elastischen Styrolpolymerisate sowie Formkörper, hergestellt aus den elastischen Polystyrolschäumen.

Die expandierbaren Styrolpolymerisate enthalten als Komponente a) 75 bis 98 Gew.-%, vorzugsweise 85 bis 93 Gew.-% Polystyrol und/oder ein Styrolcopolymerisat mit mindestens 80 Gew.-% einpolymerisiertem Styrol. Als Comonomere kommen z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylcarbazol und Maleinsäure(anhydrid). Vorteilhaft enthält das Polystyrol eine geringe Menge eines Vernetzers einpolymerisiert, d.h. einer Verbindung mit mehr als einer, vorzugsweise 2 Doppelbindungen, wie Divinylbenzol, Butadien oder Butandioldiacrylat. Der Vernetzer wird im allgemeinen in Mengen von 0,005 bis 0,05 mol-%, bezogen auf Styrol, verwendet.

Zur Erzielung einer besonders hohen Expandierbarkeit ist es zweckmäßig, daß das Styrolpolymerisat ein mittleres Molekulargewicht M_{w} (Gewichtsmittel), gemessen nach der GPC-Methode, zwischen 100 000 und 200 000 aufweist, insbesondere zwischen 130 000 und 180 000. Verbesserte Verarbeitungseigenschaften weist der Schaumstoff dann auf, wenn die hochmolekulare Flanke des nach der GPC-Methode gemessenen Molekulargewichtsteilungskurve so steil ist, daß die Differenz der Mittelwerte (M_{Z+1}-M₂) weniger als 150 000 beträgt. Die GPC-Methode ist beschrieben in G. Glöckler, Polymercharakterisierung, Chromatographische Methoden Band 17, Hüthig-Verlag, Heidelberg 1982. Die genannten Mittelwerte sind beschrieben in H.G. Elias, Makromoleküle, Hüthig-Verlag, Heidelberg 1971, Seiten 52-64.

Styrolpolymerisate, die die obengenannten mittleren Molgewichte aufweisen, können durch Mitverwendung von Reglern bei der Polymerisation erhalten werden. Als Regler verwendet man zweckmäßig 0,01 bis 1,5 Gew.-%, vorzugsweise 0,01 bis 0,5 Gew.-%, einer bromfreien organischen Verbindung mit einer Kettenübertragungskonstante K zwischen 0,1 und 50. Zweckmäßig wird der Regler während der Polymerisation erst bei einem Umsatz von 20 bis 90 % zugefügt, um eine steile hochmolekulare Flanke der Molekulargewichtsverteilungskurve zu erzielen.

Ein vorteilhaftes hohes Expansionsvermögen läßt sich auch dadurch erzielen, daß die Komponente a) 0,1 bis 10 Gew.-%, vorteilhaft 0,5 bis 10 Gew.-%, eines Styrolpolymeren mit einem mittleren Molekulargewicht (Gewichtsmittel) zwischen 500 und 5 000 enthält.

Weitere Details der Molekulargewichtsregelung bei der Herstellung expandierbarer Styrolpolymerisate sind der EP-B 106 129 zu entnehmen.

Styrolpolymerisate, die 0,1 bis 2 Gew.-%, vorzugsweise 0,15 bis 1,5 Gew.-%, einpolymerisiertes Acrylnitril enthalten, führen zu Schaumstoffen, die sich durch weitgehende Schrumpffreiheit auszeichnen. Auch ein Gemisch aus 95 bis 99,5 Gew.-% Polystyrol und 0,5 bis 5 Gew.-% eines styrollöslichen Styrol-Acrylnitril-Copolymeren zeigt diese Eigenschaften, wenn der Gesamtgehalt an Acrylnitril im Gemisch 0,1 bis 2 Gew.-%, vorzugsweise 0,15 bis 2 Gew.-% beträgt.

Styrolpolymerisate, die 3 bis 20 Gew.-%, vorzugsweise 5 bis 15 Gew.-% einpolymerisierbares Acrylnitril enthalten, führen zu Schaumstoffen mit hoher Ölbeständigkeit. Auch ein Gemisch aus 50 bis 85 Gew.-% Polystyrol und 15 bis 50 Gew.-% eines styrollöslichen Styrol-Acrylnitril-Copolymeren zeigt diese vorteilhafte Eigenschaft, wenn der Gesamtgehalt an Acrylnitril im Gemisch 3 bis 20 Gew.-%, vorzugsweise 5 bis 15 Gew.-%, beträgt. Die Herstellung derartiger Mischungen erfolgt auf einfache Weise dadurch, daß man vor der Polymerisation die vorgesehene Menge des Styrol-Acrylnitril-Copolymeren in Styrol löst.

Styrolpolymerisate, die 2 bis 15 Gew.-%, insbesondere 3 bis 12 Gew.-% Maleinsäure(anhydrid) als Comonomeres enthalten, führen zu Schaumstoffen, die sich durch hohe Wärmeformbeständigkeit auszeichnen. Vorteilhaft geht man dabei von einem Gemisch aus Polystyrol und einem handelsüblichen Styrol-Maleinsäureanhydrid-Copolymeren mit einem Maleinsäureanhydridgehalt von 15 bis 49 Gew.-% aus, das durch Lösen des Copolymeren in Styrol und anschließende Polymerisation leicht hergestellt werden kann.

Als Komponente b) kommen insbesondere styrollösliche Elastomere mit Glasübergangstemperaturen unter 0°C, vorzugsweise unter -10°C, insbesondere unter -20°C, zum Einsatz.

Die Elastomeren sind im allgemeinen im wesentlichen unvernetzt, gegebenenfalls nur soweit vernetzt, daß die Löslichkeit im Styrol nicht beeinträchtigt ist.

Vorzugsweise werden für die erfindungsgemäßen Styrolpolymerisate Polybutadien-Kautschuke eingesetzt, insbesondere solche mit Molekulargewichten von (Mw) von 200 000 bis 300 000 und einem Gehalt von < 50 % 1,4-cis Strukturen und einem Anteil von 1,2-Vinylstrukturen von 5 bis 20 % (medium-cis-Aufbau) oder einem Gehalt von > 50 bis 99 % 1,4-cis-Strukturen und einem Anteil von 1,2-Vinylstrukturen von < 5 % (high-cis-Aufbau).

Die Elastomerphase ist in der Styrolphase in Form von Zellteilchen in der Polystyrolphase dispergiert.

Dabei sollten die Zellteilchen Durchmesser von 0,1 bis 10 µ, insbesondere 0,5 bis 5 µ, aufweisen.

Durch die Mitverwendung der Komponente b) kommt es insbesondere zu einer besseren Verträglichkeit der Komponenten a) und c) untereinander sowie zu einer weiteren Erhöhung der Elastizität der Schaumstoffe.

Es ist jedoch auch möglich, bei der Herstellung der erfindungsgemäßen Produkte auf die Komponente b) zu verzichten.

Die als Komponente c) verwendeten Kern-Schale-Kautschuke werden vorzugsweise durch Emulsionspolymerisation unter partieller Pfropfung hergestellt.

Hierbei werden zunächst olefinisch ungesättigte Monomere, zumeist in Emulsion, polymerisiert und danach auf die so entstandenen Teilchen ("Kern") eine "Schale" durch Polymerisation von anderen olefinisch ungesättigten Monomeren, ebenfalls zumeist in Emulsion, aufpolymerisiert, wobei es zu einer Pfropfung zwischen Kern und Schale kommt.

Zur Herstellung der erfindungsgemäßen Styrolpolymerisate werden als Komponente c) insbesondere solche Produkte mit einem Kern aus einem weichen Polymerisat und einer Schale aus einem härteren Polymerisat. Unter "weichen Polymerisaten" werden im Sinne der vorliegenden Erfindung Polymerisate mit Glasübergangstemperaturen von 20 bis -60°C, vorzugsweise von 10 bis -40°C verstanden. Das Kernmaterial besteht hierbei vorzugsweise aus Polymerisationsprodukten von Gemischen aus C₁-C₈-Alkylacrylaten und Alkylaromaten, wie Styrol, sowie üblichen Vernetzern und Propfvernetzern. Es werden Gemische aus 40 bis 90 Gew.% Alkylacrylat und 10 bis 60 Gew.% Acrylaromaten eingesetzt.

Das Schalenmaterial besteht hierbei vorzugsweise aus Polymerisationsprodukten von Gemischen aus Alkylmethacrylaten und Styrol, wobei hierbei der Gehalt an Styrol 80 bis 99 Gew.% 1 bis und der Gehalt an Alkylmethacrylaten 20 Gew.-% beträgt.

Der Anteil des Kerns beträgt 40 bis 80 Gew.-%, der der Schale 60 bis 80 Gew.-%, jeweils bezogen auf das Gesamtgewicht der Monomeren.

Der Kern-Schale-Kautschuk wird nach der Polymerisation üblicherweise durch eine dem Fachmann bekannte Methode, z. B. durch Zugabe von Magnesiumsalzen zur Emulsion, ausgefällt, gewaschen, getrocknet und zerkleinert.

Es ist jedoch auch möglich, den Kautschuk durch Sprühtrocknung in eine leicht zu fördernde Form zu bringen. Weniger verbreitet, jedoch gleichfalls möglich ist es, die wäßrige Emulsion-Abmischung mit dem Polystyrol direkt in einen Extruder zu dosieren.

Eine Beschreibung derartiger Polymerisate sowie ihrer Herstellung findet sich beispielsweise in EP-A-0 376 096.

Die Komponente c) liegt in der Polystyrolphase in Form von Kapselteilchen mit Durchmessern von 50 bis 300, insbesondere 100 bis 200 nm, vor.

Ausführungen zur Morphologie von elastomermodifizierten Styrolpolymerisaten finden sich in: Echte, Rubber-Toughened Styrene Polymers, Advances in Chemistry Series No. 222, 1989.)

Die expandierbaren Styrolpolymerisate enthalten in homogener Verteilung als Komponente d) 1 bis 15 Gew.-%, vorzugsweise 3 bis 10 Gew.-% eines niedrig siedenden Treibmittels. Die Treibmittel sollen das Polystyrol nicht lösen, aber in Polystyrol löslich sein. Der Siedepunkt soll unter dem Erweichungspunkt des Polystyrols liegen. Geeignete Treibmittel sind beispielsweise Propan, Butan, Pentan, Hexan, Cyclopentan, Cyclohexan, Octan, Dichlordifluormethan, Trifluorchlormethan und 1,1,1-Difluorchlorethan. Vorzugsweise wird Pentan verwendet.

Die expandierbaren Styrolpolymerisate können ferner übliche Zusatzstoffe in wirksamen Mengen enthalten, wie Farbstoffe, Füllstoffe, Stabilisatoren, Flammschutzmittel, Synergisten, Keimbildner, Gleitmittel, Antistatika, beim Verschäumen antiverklebend wirkende Stoffe und Mittel zur Verkürzung der Entformzeit beim Ausschäumen.

Als Zusatzstoffe sind auch Poly-(2,6-dimethyl)-1,4-phenylenether und Poly-1,4-phenylensulfid geeignet. In Mengen von 1 bis 20 Gew.-%, bezogen auf die Komponente a) bewirken diese Zusätze eine Erhöhung der Wärmeformbeständigkeit des Schaumstoffs.

Die Herstellung der erfindungsgemäßen Styrolpolymerisate kann vorzugsweise durch Vermischen der Komponenten a), b), c) und gegebenenfalls auch d) in der Schmelze, zumeist in einem Extruder erfolgen, wobei bei Zugabe von d) der Strang nach dem Auspressen so rasch abgekühlt werden muß, daß kein Aufschäumen erfolgt. Anschließend wird das erhaltene Styrolpolymerisat zerkleinert, zumeist durch Granulierung.

Wenn das Treibmittel d) nicht bei der Extrusion dem Styrolpolymerisat zugesetzt wird, muß es nach dem Granulieren zugesetzt werden.

Weiterhin ist es möglich, die Komponente b) in Styrol zu lösen und diese Lösung zu polymerisieren, wobei die Polymerisation vorzugsweise in Masse durchgeführt wird.

Dabei wird die Komponente b) in Styrol gelöst und diese Lösung nach an sich bekannten Verfahren, zumeist unter Zusatz von radikalischen Initiatoren oder durch Wärmezufuhr, polymerisiert.

Es ist jedoch auch möglich, Polymerisation in Masse bis zu einem Umsatz von ca. 30 % durchzuführen, das so erhaltene Vorpolymerisat auf bekannte Weise zu suspendieren und die Polymerisation in Suspension zu Ende zu führen.

Besonders günstige Ergebnisse werden erzielt, wenn die Styrolpolymerisate durch Massepolymerisation einer Lösung der Komponente b) in Styrol in der oben beschriebenen Art und Mischung des Polymerisates mit der Komponente c) hergestellt werden.

Die Vermischung des Polymerisats aus a) und b) mit der Komponente c) kann vorzugsweise in der Schmelze, insbesondere durch Extrusion erfolgen.

Es ist jedoch auch möglich, die getrocknete Komponente c) gemeinsam mit der Komponente b) dem Styrol vor der Polymerisation zuzugeben, und danach wie oben beschrieben zu polymerisieren, um zusätzliche Extrusions- und Granulierschritte zu sparen. Bei dieser Ausführungsform ist es auch möglich, das Treibmittel bei der Polymerisation zuzugeben und somit einen zusätzlichen Verfahrensschritt zur Treibmittelzugabe einzusparen.

Üblicherweise erfolgt jedoch der Zusatz des Treibmittels nach dem Imprägnierverfahren. Dazu müssen die erfindungsgemäßen Polymerisate in Teilchenform gebracht werden. Dies erfolgt zweckmäßigerweise durch Extrudieren mit nachfolgender Granulierung.

Die Granulate liegen danach zumeist in Form von Partikeln, d.h. in Perlform oder Granulatform, vor. Ihr mittlerer Durchmesser beträgt vorzugsweise 0,1 bis 6 mm, mm, insbesondere 0,4 bis 3 mm.

Zur Imprägnierung wird das Granulat in einer Flüssigkeit, zumeist Wasser, in Gegenwart der üblichen Hilfs- und Zusatzstoffe in einem Druckbehälter suspendiert, dieser inertisiert und auf eine Temperatur gebracht, die oberhalb des Erweichungspunktes, jedoch unterhalb des Schmelzpunktes des Polymeren liegt. Bei dieser Temperatur wird das Treibmittel aufgepreßt. Nach dem Abkühlen und Entspannen wird das imprägnierte Granulat abgetrennt, gereinigt und getrocknet, wobei das Trocknen vorzugsweise bei Raumtemperatur erfolgt, beispielsweise in einem Luftstrom.

Weitere Angaben zu den üblichen Herstellungsverfahren findet sich beispielsweise in Kunststoffhandbuch, Band 5, Polystyrol, herausgegeben von R. Vieweg und G. Daumiller, Carl-Hauser-Verlag München, 1969.

Für die Herstellung von Schaumstoffen werden die expandierbaren Styrolpolymerisate in bekannter Weise durch Erhitzen auf Temperaturen oberhalb ihres Erweichungspunktes, beispielsweise mit Heißluft oder vorzugsweise mit Dampf, expandiert. Die erhaltenen Schaumstoffpartikel können nach dem Abkühlen und gegebenenfalls einer Zwischenlagerung durch erneutes Erhitzen weiter aufgeschäumt werden. Sie können abschließend in bekannter Weise in nicht gasdicht schließenden Formen zu Formteilen verschweißt werden.

Die erhaltenen Schaumstoffe weisen Dichten von 10 bis 60 g/l auf. Sie zeichnen sich durch eine hohe Elastizität aus. So besitzen sie ein Rückstellvermögen, das bis zu 90 % bei viermaliger Stauchung beträgt. Damit sind sie herkömmlichen Polystyrolpartikelschaum deutlich überlegen.

Die Treibmittelverluste der unverschäumten Perlen sind sehr gering. Auch nach einer Lagerung von mehreren Wochen war eine Verschäumung noch problemlos möglich.

Die vorgeschäumten Perlen sind von einer gleichmäßigen Zellstruktur und verschweißen beim Formprozeß ohne Bildung von Lunkern. Die so hergestellten Formkörper weisen eine ausgezeichnete Wärmeformbeständigkeit auf.

Darüber hinaus besitzen die erfindungsgemäßen Schaumstoffe eine überraschend gute Wärmedämmung, die bis zu 10 % besser ist als die konventioneller Polystyrole gleicher Dichte. Die Schäume und Formkörper sind problemlos recyclebar.

Die Erfindung soll an nachfolgenden Beispielen näher erläutert werden:

### Beispiel 1

8500 g eines Polystyrols mit einer Viskositätszahl von 74 cm³/g, einem Molekulargewicht (M_{w}) von 220 000 und 1500 g eines Kern-Schale Kautschuks der Zusammensetzung: Kern 65 Gew.-Teile (75 Gew.-% n-Butylacrylat/25 Gew.-% Styrol) Schale 35 Gew.-Teile (95 Gew.-% Styrol/5 Gew.-% Methylmethacrylat), wurden in einem 2-Schnecken-Extruder der Firma Werner und Pfleiderer mit einem Durchmesser von 30 mm bei 190 °C und einem Durchsatz von 10 kg/h extrudiert und dabei homogen vermischt. Das Gemisch wurde durch einen Düsensatz mit Bohrung 1 mm gedrückt, die Stränge durch ein Wasserbad geführt und nach dem Erkalten in Form von 1x1x3 mm langem Granulat abgeschlagen.

In diesem Gemisch lag der Kautschuk in Form von Kapselteilchen mit einem mittleren Durchmesser von 100 nm vor. 6000 g dieses Blends wurden zusammen mit 21 000 g vollentsalztem Wasser, 76 g Natriumpyrophosphat, 155 g Magnesiumsulfat-Heptahydrat und 50 g einer 40 gew.-%igen Lösung eines Alkylbenzolsulfonates (Mersolat® K 30, Bayer AG) in einen 50 l fassenden Rührkessel gegeben. Dieser wurde verschlossen, 2 mal durch Aufpressen von 1 atm Stickstoff inertisiert und unter Rühren bei 250 Upm auf 130 °C aufgeheizt. Nach Erreichen von 130 °C wurden während einer Dauer von 15 Minuten 720 g eines Gemisches aus 80 Gew.-% n-Pentan und 20 Gew.-% iso-Pentan in den Kessel gedrückt und und weitere 10 Stunden bei 130 °C gerührt.

Nach dem Abkühlen und Entspannen wurde der Kesselinhalt abgelassen und die Perlen aufgefangen. Diese wurden 2 mal mit vollentsalztem Wasser gewaschen und durch Hindurchsaugen von Umgebungsluft mit einer Temperatur von 23 °C auf einer Vakuumnutsche getrocknet.

Die Perlen hatten einen Treibmittelanteil von 6,1 Gew.-% und einen Innenwassergehalt von 0,11 Gew.-%.

Nach eintägiger offener Lagerung wurde durch diskontinuierliches Vorschäumen während 10 Minuten bei 100 °C eine Schüttdichte von 11,4 g/l erreicht.

Nach vierzehntägigem offenen Auslegen wurde bei gleichen Vorschäumbedingungen eine Schüttdichte von 11,8 g/l erreicht.

Der Schaum war in beiden Fällen von gleichmäßiger feinzelliger Struktur.

Durch Bedampfen von Schaumstoffperlen für 20 Sekunden bei einem Überdruck von 0,7 bar in einer nicht völlig dicht schließenden Form der Abmessungen 20 x 20 x 4 cm wurde eine Platte mit einer Dichte von 21 g/l hergestellt. Diese wiesen nach einer 4-maligen Stauchung um 70 % eine Rückstellung von 88,5 % auf, bei einer Dichte von 35,5 g/l lag die elastische Rückstellung im gleichen Versuch bei 84,5 % (bestimmt nach DIN 53 577).

Die Wärmeleitfähigkeit nach Poensgen (DIN 52 616) lag 7 % unter dem entsprechenden, bei gleichen Bedingungen bestimmten Wert des Standardpolystyrols Styropor® F 14 (BASF AG) gleicher Dichte.

### Beispiel 2

85 Gew.-Teile eines Polymerisates, das durch radikalische Polymerisation einer Lösung von 8 Gew.-Teilen eines Polybutadiens mit einem Molekulargewicht (M_{w}) von 250 000 und einem Medium-cis-Aufbau in 92 Gew.-Teilen Styrol hergestellt wurde, und 15 Gew.-Teile des Kern Schale-Kautschuks nach Beispiel 1 wurden wie in Beispiel 1 beschrieben verblendet, granuliert, mit der in Beispiel 1 beschriebenen Treibmittelmischung imprägniert und verschäumt.

Das Granulat hatte nach dem Aufarbeiten einen Treibmittelanteil von 5,8 Gew.-% und einen Innenwassergehalt von 0,6 Gew.-%.

Nach eintägiger offener Lagerung wurde durch diskontinuierliches Vorschäumen während 7 Minuten bei 100 °C eine minimale Schüttdichte von 10,6 g/l erreicht.

Nach dreitägigem offenen Auslegen wurde bei gleichen Vorschäumbedingungen eine minimale Schüttdichte von 10,9 g/l erreicht.

Der Schaum war in beiden Fällen von gleichmäßiger feinzelliger Struktur.

Eine wie in Beispiel 1 hergestellte Platte mit einer Dichte von 19,8 g/l wies nach einer 4-maligen Stauchung um 50 % eine Rückstellung von 92 % auf (bestimmt nach DIN 53 577).

Die Wärmeleitfähigkeit nach Poensgen (DIN 52 616) lag 7 % unter dem entsprechenden, bei gleichen Bedingungen bestimmten Wert des Standardschaumpolystyrols Styropor® F 14 (BASF AG) gleicher Dichte.

### Beispiel 3 (Vergleich)

Es wurde verfahren wie in Beispiel 1, nur daß auf den Zusatz des Kern-Schale-Kautschuks zum Polystyrol verzichtet wurde.

Das Produkt hatte nach dem Aufarbeiten einen Treibmittelgehalt von 8,2 Gew.-% und einen Wassergehalt von 0,03 Gew.-%.

Nach eintägiger offener Lagerung wurde durch diskontinuierliches Vorschäumen während 10 Minuten bei 100 °C eine Schüttdichte von 12,1 g/l erreicht.

Nach vierzehntägigem offenen Auslegen wurde bei gleichen Vorschäumbedingungen eine Schüttdichte von 16,9 g/l erreicht.

Der Schaum war in beiden Fällen von grober Struktur.

Eine wie in Beispiel 1 hergestellte Platte mit einer Dichte von 20,0 g/l wies nach einer 4-maligen Stauchung um 70 % eine Rückstellung von 84,5 % auf, bei einer Dichte von 36,5 g/cm lag die elastische Rückstellung im gleichen Versuch bei 76,2 % (bestimmt nach DIN 53 577).

## Patentansprüche

1. Expandierbare Styrolpolymerisate für elastische Polystyrolschäume, enthaltend
a) 75 bis 99 Gew.-% Polystyrol und/oder eines Styrolcopolymerisates mit mindestens 80 Gew.-% einpolymerisiertem Styrol,
b) 0 bis 24 Gew.-%, mindestens eines styrollöslichen Elastomeren,
c) 1 bis 25 Gew.-%, mindestens eines Pfropfcopolymerisats mit Kern-Schale-Aufbau, bestehend aus
• 40 bis 80 Gew.-% eines Kerns aus einem Copolymerisat aus 40 bis 90 Gew.-% eines Alkyl(meth)acrylats und 60 bis 10 Gew.-% Stryol und
• 60 bis 20 Gew.-% einer Schale aus einem Copolymerisat aus 80 bis 99 Gew.-% Styrol und 1 bis 20 Gew.-% eines Alkyl(meth)-acrylats
d) 1 bis 15 Gew.-%, bezogen auf die Summe aus a), b) und c),eines niedrigsiedenden Treibmittels, sowie gegebenenfalls
e) übliche Zusatzstoffe in wirksamen Mengen.

2. Expandierbare Styrolpolymerisate nach Anspruch 1, dadurch gekennzeichnet, daß die Komponente b) ausgewählt ist aus der Gruppe, enthaltend Polybutadien, Polyisobutylen und Ethylen-Propylen-Kautschuk.

3. Expandierbare Styrolpolymerisate nach Anspruch 1, dadurch gekennzeichnet, daß die Komponente b) Polybutadien ist.

4. Expandierbare Styrolpolymerisate nach Anspruch 1, dadurch gekennzeichnet, daß die Komponente c) ein Pfropfcopolymerisat mit einem Kern aus einem Polymerisat mit einer Glasübergangstemperatur von 20 bis - 60°C und einer Schale aus einem härteren Material ist.

5. Verfahren zur Herstellung von expandierbaren Styrolpolymerisaten nach Anspruch 1, dadurch gekennzeichnet, daß man die Komponente b) in der Komponente a) auflöst, die entstandene Lösung nach an sich bekanntem Verfahren polymerisiert, das Polymerisat auf übliche Weise aufarbeitet, mit der Komponente c) in der Schmelze vermischt, granuliert und den Blend während oder nach dem Granulieren auf an sich bekannte Weise mit Treibmittel imprägniert.

6. Verfahren zur Herstellung von expandierbaren Styrolpolymerisaten nach Anspruch 1, dadurch gekennzeichnet, daß man die Komponente b) in der Komponente a) auflöst, in dieser Lösung die Komponente c) dispergiert, die Dispersion nach an sich bekanntem Verfahren polymerisiert, das Polymerisat auf übliche Weise aufarbeitet und nach an sich bekanntem Verfahren mit dem Treibmittel imprägniert.

7. Verfahren zur Herstellung von elastischen Schaumstoffformteilen, dadurch gekennzeichnet, daß man expandierbare Styrolpolymerisate nach Anspruch 1 in Partikelform durch Erhitzen bei einer Temperatur oberhalb des Erweichungspunktes expandiert und die so erhaltenen Schaumstoffpartikel in nicht gasdicht abschließenden Formen durch Erhitzen miteinander verschweißt.

## Claims

1. An expandable styrene polymer for elastic polystyrene foams, comprising
a) from 75 to 99 % by weight of polystyrene and/or a styrene copolymer containing at least 80 % by weight of copolymerized styrene,
b) from 0 to 24 % by weight of at least one styrene-soluble elastomer,
c) from 1 to 25 % by weight of at least one graft copolymer having a core/shell structure and consisting of
• from 40 to 80 % by weight of a core made from a copolymer comprising from 40 to 90 % by weight of an alkyl (meth)acrylate and from 60 to 10 % by weight of styrene and
• from 60 to 20 % by weight of a shell made from a copolymer comprising from 80 to 99 % by weight of styrene and from 1 to 20 % by weight of an alkyl (meth)acrylate
d) from 1 to 15 % by weight, based on the sum of a), b) and c), of a low-boiling blowing agent, and, if desired,
e) conventional additives in effective amounts.

2. An expandable styrene polymer as claimed in claim 1, wherein component b) is selected from the group consisting of polybutadiene, polyisobutylene and ethylene-propylene rubber.

3. An expandable styrene polymer as claimed in claim 1, wherein component b) is polybutadiene.

4. An expandable styrene polymer as claimed in claim 1, wherein component c) is a graft copolymer having a core of a polymer having a glass transition temperature of from 20 to -60°C and a shell of a harder material.

5. A process for the preparation of an expandable styrene polymer as claimed in claim 1, wherein component b) is dissolved in component a), the resultant solution is polymerized by a process known per se, the polymer is worked up in a conventional manner, and mixed with component c) in the melt, and the blend is granulated and impregnated with blowing agent in a manner known per se during or after the granulation.

6. A process for the preparation of an expandable styrene polymer as claimed in claim 1, wherein component b) is dissolved in component a), component c) is dispersed in this solution, the dispersion is polymerized by a process known per se, and the polymer is worked up in a conventional manner and impregnated with the blowing agent by a process known per se.

7. A process for the production of an elastic foam molding, which comprises expanding an expandable styrene polymer as claimed in claim 1 in particle form by heating at a temperature above the softening point, and welding resultant foam particles to one another by heating in molds which do not have a gas-tight seal.

## Revendications

1. Polymères du styrène expansibles pour des mousses de polystyrène élastiques, qui contiennent
a) 75 à 99% en poids de polystyrène et/ou d'un copolymère du styrène comportant au moins 80% en poids de styrène incorporé par polymérisation,
b) 0 à 24% en poids d'au moins un élastomère soluble dans le styrène,
c) 1 à 25% en poids d'au moins un copolymère de greffage de constitution à noyau et enveloppe, qui se compose de
• 40à 80% en poids d'un noyau constitué d'un copolymère de 40 à 90% en poids d'un (méth)acrylate d'alkyle et de 60 à 10% en poids de styrène, et
• 60 à 20% en poids d'une enveloppe constituée d'un copolymère de 80 à 99% en poids de styrène et de 1 à 20% en poids d'un (méth)acrylate d'alkyle,
d) 1 à 15% en poids, par rapport à la somme de a), b) et c) d'un agent porogène à bas point d'ébullition, ainsi que, éventuellement,
e) des additifs usuels en proportions actives.

2. Polymères du styrène expansibles suivant la revendication 1, caractérisés en ce que l'on choisit le composant b) dans le groupe formé par le butadiène, le polyisobutylène et un caoutchouc d'éthylène-propylène.

3. Polymères du styrène expansibles suivant la revendication 1, caractérisés en ce que le composant b) est le polybutadiène.

4. Polymères du styrène expansibles suivant la revendication 1, caractérisés en ce que le composant c) est un copolymère de greffage avec un noyau formé d'un polymère à température de transition vitreuse de 20 à 60°C et une enveloppe formée d'une matière plus dure.

5. Procédé de préparation de polymères du styrène expansibles suivant la revendication 1, caractérisé en ce que l'on dissout le composant b) dans le composant a), on polymérise la solution formée selon des procédés en soi connus, on traite le polymère de la manière habituelle, on le mélange au composant c) à l'état fondu, on granule le mélange et on imprègne le mélange pendant ou après la granulation de l'agent porogène d'une manière en soi connue.

6. Procédé de préparation de polymères du styrène expansibles suivant la revendication 1, caractérisé en ce que l'on dissout le composant b) dans le composant a), on disperse le composant c) dans cette solution, on polymérise la dispersion selon des procédés en soi connus, on traite le polymère de la manière habituelle et on l'imprègne de l'agent porogène selon des procédés en soi connus.

7. Procédé de préparation d'articles moulés en mousse élastique, caractérisé en ce que l'on provoque l'expansion de polymères du styrène expansibles suivant la revendication 1 sous la forme de particules par chauffage à une température supérieure au point de ramollissement et on soude mutuellement les particules de mousse ainsi obtenues dans des moules fermant de manière étanche au gaz par chauffage.
